# EUROPÄISCHE PATENTANMELDUNG

(11) **EP 4 092 807 A1**
(43) Veröffentlichungstag der Anmeldung: **23.11.2022**
(21) Anmeldenummer: 21174111.1
(22) Anmeldetag: 17.05.2021
(51) Int. Cl.: H01M 10/48, H01M 50/213, H01M 10/04

(54) **AKKUEINHEIT FÜR EINE HANDWERKZEUGMASCHINE, HANDWERKZEUGMASCHINE UND HERSTELLUNGSVERFAHREN**

(71) Anmelder: Hilti Aktiengesellschaft, 9494 Schaan (LI)
(72) Erfinder: Kuhlmann, Kevin, 86916 Kaufering (DE)
(74) Vertreter: Hilti Aktiengesellschaft Corporate Intellectual Property

(57) **Zusammenfassung**

Akkueinheit (100) für eine Handwerkzeugmaschine (1), aufweisend:
ein Zellenmodul (120) mit einem Halterahmen (121, 121') und mehreren von dem Halterahmen (121, 121') gehaltenen Einzelzellen (122), wobei die Einzelzellen (122) zum Bereitstellen einer vorgegebenen Ausgangsspannung elektrisch miteinander verbunden (123) sind,
einen Temperatursensor (140, 143) zum Erfassen mindestens eines Temperaturwertes des Zellenmoduls (120), und
ein mit dem Temperatursensor (140, 143) verbundenes Elektronikmodul (110) zum Überwachen einer Temperatur des Zellenmoduls (120) in Abhängigkeit des erfassten mindestens einen Temperaturwertes,
wobei der Temperatursensor (140, 143) von einem elastischen Element (150, 155) in einem direkten Kontakt mit einer Einzelzelle (122a) des Zellenmoduls (120) gehalten wird.

## Beschreibung

### GEBIET DER ERFINDUNG

Die vorliegende Erfindung betrifft eine Akkueinheit für eine Handwerkzeugmaschine, eine Handwerkzeugmaschine mit einer entsprechenden Akkueinheit und ein Herstellungsverfahren für eine solche Akkueinheit.

Mobile Arbeitsmaschinen, wie beispielsweise Handwerkzeugmaschinen, werden häufig mit Akkueinheiten als Stromquelle betrieben. Die Akkueinheiten umfassen galvanische Zellen, welche sich beim Entladen erwärmen. Erhitzen sich die Zellen durch den Entladevorgang oder durch andere Wärmequellen auf hohe Temperaturen, von beispielsweise größer als 70 - 75 Grad Celsius, kann dies zu vorzeitiger Alterung der Zellen führen. Bei starker Überhitzung der galvanischen Zellen kann es auch zu einem Brennen oder sogar Explodieren der Zellen kommen.

Um ein Überhitzen der Zellen einer Akkueinheit zu vermeiden, wird die Temperatur der Zellen mittels eines Temperatursensors gemessen und von einem Elektronikmodul überwacht. Wird eine Höchsttemperatur überschritten, so wird eine Abschaltautomatik der Handwerkzeugmaschine aktiviert, welche die Maschine abschaltet.

Herkömmlich werden Temperatursensoren auf die Mantelfläche einer äußeren Zelle eines Zellpakets einer Akkueinheit mittels eines Klebebands geklebt.

Vor diesem Hintergrund besteht die Aufgabe der vorliegenden Erfindung, eine verbesserte Akkueinheit für eine Handwerkzeugmaschine zu schaffen.

### OFFENBARUNG DER ERFINDUNG

Gemäß einem ersten Aspekt wird eine Akkueinheit für eine Handwerkzeugmaschine vorgeschlagen. Die Akkueinheit weist ein Zellenmodul mit einem Halterahmen und mehreren von dem Halterahmen gehaltenen Einzelzellen auf. Die Einzelzellen sind zum Bereitstellen einer vorgegebenen Ausgangsspannung elektrisch miteinander verbunden. Die Akkueinheit weist weiterhin einen Temperatursensor zum Erfassen mindestens eines Temperaturwertes des Zellenmoduls auf. Zudem weist die Akkueinheit ein mit dem Temperatursensor verbundenes Elektronikmodul zum Überwachen einer Temperatur des Zellenmoduls in Abhängigkeit des erfassten mindestens einen Temperaturwertes auf. Außerdem wird der Temperatursensor von einem elastischen Element in einem direkten Kontakt mit einer Einzelzelle des Zellenmoduls gehalten.

Durch das elastische Element kann der Temperatursensor einfacher an dem Zellenmodul, insbesondere an einer Einzelzelle des Zellenmoduls, angebracht werden. Insbesondere kann das elastische Element eine Einführhilfe in Form einer schrägen Ebene aufweisen. Vorteilhafterweise ist ein Klebstoff und/oder ein Klebeband zum Anbringen des Temperatursensors nicht erforderlich.

Außerdem kann der Temperatursensor mittels des elastischen Elements lösbar an dem Zellenmodul, insbesondere an einer Einzelzelle des Zellenmoduls, befestigt werden. Die Akkueinheit weist daher den Vorteil auf, dass die einzelnen Module (Zellenmodul(e), Elektronikmodul) unabhängig voneinander austauschbar sind. Im Falle eines Defekts eines Moduls muss daher nicht die ganze Akkueinheit ersetzt werden, sondern nur das defekte Modul. Zudem kann die Akkueinheit repariert werden, indem diese in die einzelnen Module zerlegt wird, wodurch die Defektstelle zugänglich wird.

Die Akkueinheit ist insbesondere zum Betreiben einer Handwerkzeugmaschine, die mit einer Betriebsspannung im Bereich von 9 V - 72 V, bevorzugt zwischen 12 V - 36 V, betrieben wird, eingerichtet.

Das Zellenmodul umfasst eine Anordnung mehrerer Einzelzellen, die in dem Zellenmodul fest miteinander verdrahtet sind, um die Ausgangsspannung bereitzustellen. Die Einzelzellen können in dem Zellenmodul in einer elektrischen Reihenschaltung und/oder in einer elektrischen Parallelschaltung miteinander verbunden sein, so dass das Zellenmodul die vorgegebene Ausgangsspannung und eine vorgegebene Ladungskapazität aufweist. Eine elektrische Parallelschaltung eignet sich, um die Kapazität des Zellenmoduls zu erhöhen, ohne dabei die Ausgangsspannung zu erhöhen.

Unter einer Einzelzelle wird insbesondere eine galvanische Zelle verstanden, die genau zwei elektrische Pole bereitstellt. Das heißt, dass eine Einzelzelle insbesondere nicht aus zwei oder mehr Einheiten besteht, die jeweils für sich genommen eine galvanische Zelle bilden.

Die Ausgangspannung wird beispielsweise durch in dem Zellenmodul in Reihe geschaltete Einzelzellen erreicht. Beispielsweise hat eine einzelne Lithium-Ionen-Zelle im vollständig geladenen Zustand eine Ausgangsspannung (Klemmenspannung) von etwa 3,6 V. Werden zwei dieser Zellen in Reihe geschaltet, verdoppelt sich die Ausgangsspannung auf etwa 7,2 V. Außer Lithium-Ionen-Zellen können auch andere galvanische Zellen verwendet werden, wie Nickel-Cadmium, Nickel-Metallhydrid oder auch Bleizellen, wobei diese dann andere Ausgangsspannungen aufweisen können.

Der Halterahmen des Zellenmoduls gibt der Anordnung der Einzelzellen eine mechanische Stabilität. Der Halterahmen des Zellenmoduls ist beispielsweise aus Kunststoff, aus einem Verbundwerkstoff, insbesondere umfassend Kohlefasern, Glasfasern und/oder Aramidfasern, aus Metall und/oder aus einer Kombination der vorgenannten Materialien gefertigt. Der Halterahmen kann beispielsweise Einfassungen für jede der Einzelzellen aufweisen, so dass diese innerhalb des Halterahmens in einem durch die Einfassungen vorbestimmten Abstand zueinander angeordnet sind. Die Einzelzellen können in dem Halterahmen mit einer lösbaren oder nicht lösbaren Verbindung befestigt sein.

Das elastische Element übt eine elastische Kraft auf den Temperatursensor aus. Das elastische Element ist beispielsweise ein Federelement. Durch das elastische Element wird der Temperatursensor in einem direkten Kontakt mit einer Einzelzelle des Zellenmoduls gehaltenen. Der direkte Kontakt ist insbesondere ein direkter mechanischer und somit thermischer Kontakt zwischen einem Fühler des Temperatursensors und einer Oberfläche der Einzelzelle. Der Temperatursensor ist außerdem elektrisch mit dem Elektronikmodul verbunden. Der Temperatursensor ist beispielsweise über eine elektrische Leitung elektrisch mit dem Elektronikmodul verbunden.

Der Temperatursensor ist beispielsweise ein Heißleiter (NTC-Widerstand, engl. Negative Temperature Coefficient), welcher seinen Widerstand bei Temperaturerhöhung verringert. Der Temperatursensor umfasst beispielswiese Metalloxide oder Halbleiter. Der Temperatursensor kann aber auch ein Kaltleiter (PTC) oder ein anderer geeigneter Temperatursensor sein.

Der erfasste Temperaturwert bezieht sich insbesondere auf eine Temperatur an der Oberfläche der Einzelzelle. Der Temperaturwert wird beispielsweise als repräsentativ für eine in der Einzelzelle vorliegende Temperatur und/oder für eine mittlere Temperatur in dem Zellenmodul angenommen.

Der Temperatursensor wird durch das elastische Element an die Einzelzelle angedrückt. Der Temperatursensor ist insbesondere nicht fest mit dem Zellenmodul und/oder der Einzelzelle verbunden. Vielmehr kann der Temperatursensor zusammen mit dem Elektronikmodul von dem Zellenmodul getrennt werden, ohne dass der Temperatursensor dabei Schaden nimmt.

Zum Erfassen des mindestens einen Temperaturwertes des Zellenmoduls kann die Akkueinheit auch mehrere Temperatursensoren umfassen. Insbesondere kann es abhängig von der Anzahl der Einzelzellen in dem Zellenmodul sinnvoll sein, mehrere Temperatursensoren vorzusehen, die zum Erfassen eines jeweiligen Temperaturwertes unterschiedlicher Einzelzellen eingerichtet sind. Dabei ist jeder der Temperatursensoren mit dem Elektronikmodul elektrisch verbunden und wird von einem jeweiligen elastischen Element in einem direkten Kontakt mit einer jeweiligen Einzelzelle des Zellenmoduls gehalten.

Das Elektronikmodul dient zum Überwachen der Temperatur des Zellenmoduls in Abhängigkeit des erfassten Temperaturwerts. Hohe Temperaturen können auf die Einzelzellen erheblichen Einfluss haben. Einerseits ist eine Mobilität der Ladungsträger in der Einzelzelle bei höherer Temperatur erhöht, wodurch ein Innenwiderstand der Einzelzelle sinkt. Andererseits steigt mit steigender Temperatur auch eine chemische Reaktionsrate von unerwünschten chemischen Reaktionen, wie Korrosion, in der Einzelzelle an, was die Zelle schneller altern lässt. Zudem kann die Einzelzelle bei Überschreiten einer oberen Grenztemperatur dauerhaften Schaden nehmen oder zerstört werden, im schlimmsten Fall kann sich die Einzelzelle sogar entzünden, zersetzen und/oder sie kann explodieren. Daher wird die Temperatur des Zellenmoduls durch das Elektronikmodul überwacht. Wenn die Temperatur zu hoch wird, kann das Elektronikmodul beispielsweise einen Lade- oder Entladestrom für das Zellenmodul reduzieren, um so die Lebensdauer des Zellenmoduls zu erhöhen. Wird eine zulässige Höchsttemperatur überschritten, kann das Elektronikmodul dazu eingerichtet sein, mit einer Abschaltautomatik der Handwerkzeugmaschine zu kommunizieren, um die Handwerkzeugmaschine abzuschalten.

Das Elektronikmodul kann außer zum Überwachen der Temperatur des Zellenmoduls auch zum Überwachen weiterer Zustände des Zellenmoduls eingerichtet sind. Beispielsweise kann das Elektronikmodul einen Ladezustand des Zellenmoduls überwachen und/oder einen Lade- oder Entladestrom des Zellenmoduls steuern. Dazu kann die Akkueinheit neben dem Temperatursensor weitere Sensoren umfassen wie beispielsweise Spannungsmesser und Strommesser. Das Elektronikmodul kann beispielsweise dazu eingerichtet sein, zu verhindern, dass das Zellenmodul zu stark entladen wird, was die Einzelzellen in dem Zellenmodul beschädigen oder zerstören könnte.

Das Elektronikmodul umfasst beispielsweise einen integrierten Schaltkreis, wie einen ASIC (application specific integrated circuit), einen PLC (programmabe logic controller) oder dergleichen. Dieser wird beispielsweise von einer an dem Zellenmodul abgegriffenen Spannung betrieben. Der integrierte Schaltkreis ist dazu eingerichtet, eine aktuelle Temperatur des Zellenmoduls zu überwachen. Der integrierte Schaltkreis kann ferner dazu eingerichtet sein, eine aktuelle verbleibende Kapazität (Ladezustand), einen aktuellen Lade- und/oder Entladestrom, eine aktuelle Klemmenspannung und eine aktuelle Einzelzellspannung jeder einzelnen Zelle des mindestens einen Zellenmoduls zu überwachen.

Das Elektronikmodul und das Zellenmodul sind insbesondere mechanisch aneinander befestigt. Beispielsweise umfasst das Elektronikmodul ein Gehäuse und/oder einen Träger. Beispielsweise sind das Elektronikmodul (insbesondere das Gehäuse und/oder der Träger des Elektronikmoduls) und das Zellenmodul (insbesondere der Halterahmen des Zellenmoduls) mittels Rast-, Schnapp-, Steck- und/oder Schraubverbindungen miteinander verbunden. Diese Verbindungen lassen sich lösen, so dass das Elektronikmodul und das mindestens eine Zellenmodul von einem gekoppelten Zustand in einen zerlegten Zustand überführbar sind, ohne dass dabei ein Schaden an dem Elektronikmodul oder dem Zellenmodul entsteht.

Elektrische Verbindungen zwischen dem Elektronikmodul und dem Zellenmodul werden bevorzugt mittels Steckkontakten hergestellt, es können aber auch Federkontakte verwendet werden, insbesondere bei reinen Signalstrecken, über die nur ein minimaler Strom fließt.

Die Akkueinheit kann auch zwei oder mehr Zellenmodule umfassen, die jeweils mit dem Elektronikmodul verbunden sind.

In Ausführungsformen ist das Elektronikmodul zum Bereitstellen von elektrischen Kontakten zum elektrischen Verbinden des wenigstens einen Zellenmoduls mit der Handwerkzeugmaschine eingerichtet.

Gemäß einer Ausführungsform der Akkueinheit ist der Temperatursensor zwischen mindestens zwei Einzelzellen des Zellenmoduls angeordnet und wird von dem elastischen Element in direktem Kontakt mit mindestens einer der mindestens zwei Einzelzellen gehalten.

Anstatt, wie herkömmlich, die Temperatur des Zellenmoduls durch Temperaturmessung an der Außenseite des Zellenmoduls, d.h. an einer äußeren Einzelzelle des Zellenmoduls, abzuleiten, kann gemäß dieser Ausführungsform die Temperatur im Inneren des Zellenmoduls erfasst werden. Dadurch kann die Temperatur des Zellenmoduls besser erfasst werden. Dies ermöglicht einen besseren Schutz vor Überhitzung des Zellenmoduls.

Gemäß einer weiteren Ausführungsform der Akkueinheit weisen die Einzelzellen des Zellenmoduls jeweils eine zylindrische Form mit einer Mantelfläche auf. Weiterhin ist der Temperatursensor zwischen den Mantelflächen von mindestens zwei Einzelzellen angeordnet und wird von dem elastischen Element in direktem Kontakt mit der Mantelfläche von mindestens einer der mindestens zwei Einzelzellen gehalten.

Die zylindrische Form ist beispielsweise eine Form eines Kreiszylinders.

Gemäß einer weiteren Ausführungsform der Akkueinheit weist das elastische Element eine einseitig eingespannte Blattfeder auf, die an ihrem eingespannten Ende mit dem Halterahmen verbunden ist und an ihrem freien Ende eine senkrecht zu ihrer Längsachse wirkende elastische Kraft auf den Temperatursensor ausübt.

Dadurch kann das elastische Element einfach ausgebildet werden. Außerdem kann der Temperatursensor einfach von dem elastischen Element mit mechanischer Spannung beaufschlagt werden.

Gemäß einer weiteren Ausführungsform der Akkueinheit ist der Temperatursensor in einem Zwischenraum zwischen dem elastischen Element und der mit dem Temperatursensor in direktem Kontakt stehenden Einzelzelle angeordnet. Außerdem verjüngt sich das elastische Element zu seinem freien Ende hin und weggerichtet von der mit dem Temperatursensor in direktem Kontakt stehenden Einzelzelle.

Durch den sich zu seinem freien Ende hin verjüngenden Abschnitt des elastischen Elements in Form einer Blattfeder, ist der Zwischenraum zwischen dem elastischen Element und der Einzelzelle, insbesondere auch in der Ruhelage des elastischen Elements, zu dem freien Ende hin erweitert. Dadurch wird eine Einführhilfe für den Temperatursensor bei dem Zusammenbau der Akkueinheit bereitgestellt. Insbesondere kann der Temperatursensor damit einfacher zwischen die Einzelzelle und das elastische Element eingebracht werden.

Der sich zu seinem freien Ende hin verjüngenden Abschnitt des elastischen Elements weist insbesondere einen abgeschrägten Abschnitt (beispielsweise eine schräge Ebene) auf.

Gemäß einer weiteren Ausführungsform der Akkueinheit ist das elastische Element integral mit dem Halterahmen ausgebildet.

Dies ermöglicht eine einfache Fertigung des elastischen Elements.

Beispielsweise sind der Halterahmen und das elastische Element aus Kunststoff hergestellt. Beispielsweise sind der Halterahmen und das elastische Element zusammen in einem Kunststoffspritzgussverfahren gefertigt.

Gemäß einer weiteren Ausführungsform der Akkueinheit weist sie eine Halterung, insbesondere eine hülsenförmige Halterung, für den Temperatursensor auf.

Die Halterung bewirkt eine einfachere Handhabung des Temperatursensors. Durch die Halterung kann beispielsweise ein biegsamer Temperatursensor versteift werden und so einfacher zwischen die Einzelzelle und das elastische Element eingebracht werden.

Die Halterung ist beispielsweise an dem Halterahmen des Zellenmoduls befestigt und/oder an dem Gehäuse/Träger des Elektronikmoduls befestigt. Die Halterung kann beispielsweise auch integral mit dem Halterahmen des Zellenmoduls oder mit dem Gehäuse/Träger des Elektronikmoduls ausgebildet sein.

Gemäß einer weiteren Ausführungsform der Akkueinheit weist der Halterahmen einen Bodenabschnitt und einen Deckelabschnitt auf, zwischen denen die Einzelzellen stehend angeordnet sind. Weiterhin ist einer von dem Bodenabschnitt und dem Deckelabschnitt mit dem elastischen Element verbunden, und weist der andere von dem Bodenabschnitt und dem Deckelabschnitt den Temperatursensor auf.

Beispielsweise ist das elastische Element mit dem einen von dem Bodenabschnitt und dem Deckelabschnitt fest verbunden und/oder damit integral ausgebildet.

Beispielsweise ist der Temperatursensor und/oder eine Halterung des Temperatursensors an dem anderen von dem Bodenabschnitt und dem Deckelabschnitt angeordnet. Beispielsweise ist der Temperatursensor und/oder die Halterung des Temperatursensors mit dem anderen von dem Bodenabschnitt und dem Deckelabschnitt fest verbunden oder ist mit einem an dem anderen von dem Bodenabschnitt und dem Deckelabschnitt angebrachten Gehäuse/Träger des Elektronikmoduls fest verbunden.

Dadurch kann der Temperatursensor beispielsweise bereits bei dem Zusammenbauen von Boden- und Deckelabschnitt des Halterahmens zwischen die Einzelzelle und das elastische Element eingebracht werden und somit fertig montiert sein.

Oder der Temperatursensor kann beispielsweise bereits bei dem Anbringen des Gehäuses/Trägers des Elektronikmoduls an dem anderen von dem Boden- und dem Deckelabschnitt des Halterahmens zwischen die Einzelzelle und das elastische Element eingebracht werden und somit fertig montiert sein.

Gemäß einer weiteren Ausführungsform der Akkueinheit ist das Elektronikmodul an dem Deckelabschnitt angeordnet.

Dadurch kann die elektrische Verbindung zwischen dem Temperatursensor und dem Elektronikmodul besonders kurz und geradlinig gehalten werden.

Beispielsweise weist das Elektronikmodul selbst ein Gehäuse auf, das an dem Deckelabschnitt angebracht ist.

Gemäß einer weiteren Ausführungsform der Akkueinheit ist das elastische Element integral mit dem Bodenabschnitt ausgebildet und/oder ist eine Halterung für den Temperatursensor integral mit dem Deckelabschnitt oder mit einem an dem Deckelabschnitt angeordneten Gehäuse des Elektronikmoduls ausgebildet.

Dadurch kann die Anzahl der zu fertigenden Teile für die Akkueinheit klein gehalten werden und das elastische Element und/oder die Halterung für den Temperatursensor einfach hergestellt werden.

Gemäß einer weiteren Ausführungsform der Akkueinheit weisen die Einzelzellen jeweils eine zylindrische Form mit einer Zylinderachse auf. Zudem weist das Elektronikmodul eine Platine auf, deren Haupterstreckungsebene senkrecht zur Zylinderachse angeordnet ist.

Demgemäß handelt es sich bei dem Zellenmodul um ein Zellenmodul mit "stehenden Zellen" (im Gegensatz zu einem Zellenmodul mit "liegenden Zellen"). Dabei bedeutet "stehend" eine stehende Anordnung lediglich in Bezug auf das Elektronikmodul, jedoch nicht in Bezug auf eine Anordnung bei einer späteren Verbauung der Akkueinheit zum Beispiel in einer Handwerkzeugmaschine.

Die zylindrische Form ist beispielsweise eine Form eines Kreiszylinders.

Bei einer stehenden Anordnung der Einzelzellen im Zellenmodul kann durch Anbringen des Elektronikmoduls an dem Zellenmodul der Temperatursensor bereits vorteilhafterweise fertig montiert sein. Außerdem ist eine elektrische Verbindung zwischen dem Elektronikmodul und dem Temperatursensor besonders kurz.

Gemäß einem zweiten Aspekt wird eine Handwerkzeugmaschine mit einer Akkueinheit gemäß dem ersten Aspekt vorgeschlagen.

Die Handwerkzeugmaschine ist beispielsweise als eine Bohrmaschine, ein Schlagbohrer, ein Bohrhammer, eine Handkreissäge, eine Stichsäge, eine Fuchsschwanzsäge, ein Trennschleifer, ein Rührwerk oder als eine andere mobile Arbeitsmaschine ausgebildet.

Die Akkueinheit ist insbesondere wie anhand des ersten Aspekts beschrieben ausgebildet.

Gemäß einem dritten Aspekt wird ein Herstellungsverfahren für eine Akkueinheit vorgeschlagen. Dabei wird ein Temperatursensor der Akkueinheit in einen Zwischenraum zwischen einem elastischen Element der Akkueinheit und einer Einzelzelle eines Zellenmoduls der Akkueinheit eingebracht wird. Weiterhin wird der Temperatursensor mittels des elastischen Elements an die Einzelzelle angedrückt.

Gemäß einer Ausführungsform des Herstellungsverfahrens weist es die Schritte auf:
stehendes Anordnen von Einzelzellen des Zellenmoduls der Akkueinheit in einem Halterahmen des Zellenmoduls, wobei der Halterahmen das elastische Element aufweist,
Anordnen eines Elektronikmoduls der Akkueinheit auf dem Halterahmen, wobei das Elektronikmodul den Temperatursensor aufweist und der Temperatursensor in den Zwischenraum zwischen dem elastischen Element und der Einzelzelle eingebracht wird, so dass der Temperatursensor von dem elastischen Element an die Einzelzelle angedrückt wird.

Gemäß einer weiteren Ausführungsform des Herstellungsverfahrens weist es die Schritte auf:
stehendes Anordnen von Einzelzellen des Zellenmoduls der Akkueinheit zwischen einem Bodenabschnitt und einem Deckelabschnitt eines Halterahmens des Zellenmoduls, wobei der Bodenabschnitt das elastische Element aufweist,
Anordnen eines Elektronikmoduls der Akkueinheit auf dem Deckelabschnitt, wobei das Elektronikmodul den Temperatursensor aufweist und der Temperatursensor in den Zwischenraum zwischen dem elastischen Element und der Einzelzelle eingebracht wird, so dass der Temperatursensor von dem elastischen Element an die Einzelzelle angedrückt wird.

Die nachfolgende Beschreibung erläutert die Erfindung anhand von exemplarischen Ausführungsformen und Figuren. In den Figuren zeigt:
- Fig. 1: eine schematische Ansicht einer Akkueinheit gemäß einer Ausführungsform;
- Fig. 2: eine Querschnittsansicht entlang Linie A-A in Fig. 1;
- Fig. 3: eine Ansicht ähnlich Fig. 2, wobei eine von einem elastischen Element ausgeübte Kraft veranschaulicht ist;
- Fig. 4: einen Temperatursensor mit einer Halterung aus Fig. 2;
- Fig. 5: eine Querschnittsansicht entlang Linie B-B in Fig. 4;
- Fig. 6: eine Ansicht ähnlich Fig. 2, wobei ein zweiter Temperatursensor dargestellt ist;
- Fig. 7: eine Querschnittsansicht einer Akkueinheit gemäß einer weiteren Ausführungsform;
- Fig. 8: ein Flussablaufdiagramm eines Herstellungsverfahrens für eine Akkueinheit gemäß einer Ausführungsform;
- Fig. 9: ein Flussablaufdiagramm eines Herstellungsverfahrens für eine Akkueinheit gemäß einer weiteren Ausführungsform; und
- Fig. 10: eine schematische Ansicht einer Handwerkzeugmaschine.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

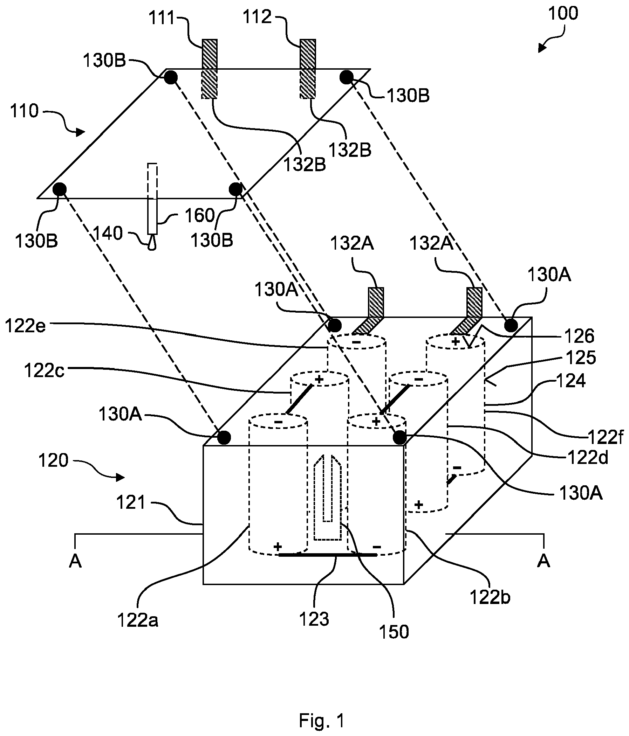

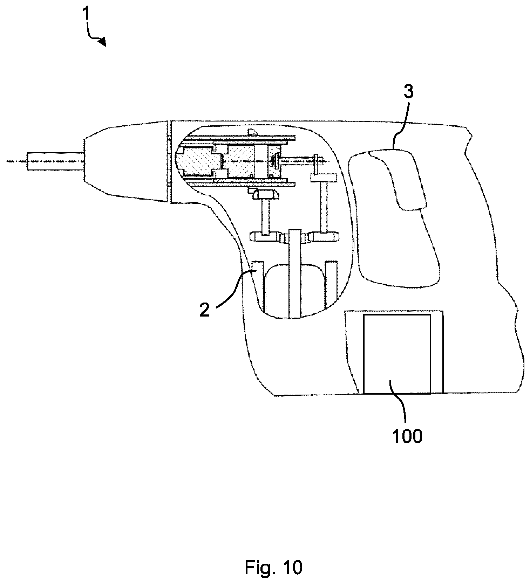

Fig. 1 zeigt eine schematische Ansicht einer Akkueinheit 100 für eine Handwerkzeugmaschine 1 (siehe Fig. 10). Die Akkueinheit 100 umfasst ein Elektronikmodul 110 und ein Zellenmodul 120. Das Zellenmodul 120 umfasst einen Halterahmen 121, welcher zum Halten mehrerer Einzelzellen 122 eingerichtet ist. In Fig. 1 sind beispielhaft sechs Einzelzellen 122 gezeigt und mit den Bezugszeichen 122 a - f gekennzeichnet. Die in dem Halterahmen 121 angeordneten Einzelzellen 122 sind über elektrische Verbindungen 123 miteinander fest verdrahtet, so dass das Zellenmodul 120 eine bestimmte Ausgangsspannung und eine bestimmte Gesamtkapazität aufweist. Die Ausgangsspannung und die Gesamtkapazität ergibt sich in Abhängigkeit der Art der Einzelzellen 122, insbesondere deren Einzelzellspannung sowie deren einzelnen Kapazitäten, und der Art der Verdrahtung der Einzelzellen 122 in dem Halterahmen 121. Die elektrischen Verbindungen 123 zwischen den Einzelzellen 122 können in den Halterahmen 121 integriert sein, beispielsweise in Form von Halteblechen, oder aber separat von dem Halterahmen, beispielsweise in Form von einzelnen Drähten oder Kabelstücken, ausgebildet sein. Bei einer elektrischen Reihenschaltung der Einzelzellen 122 entspricht die Ausgangsspannung der Summe der Einzelzellspannungen. Bei einer elektrischen Parallelschaltung entspricht die Gesamtkapazität der Summe der Einzelzellkapazitäten. Die Einzelzellen 122 können in dem Zellenmodul 120 beispielsweise in Gruppen parallelgeschaltet und die Gruppen in Reihe geschaltet vorliegen.

Das Zellenmodul 120 weist lösbare mechanische Verbinder 130A und lösbare elektrische Verbinder 132A auf. Beispielsweise handelt es sich bei den mechanischen Verbindern 130A um Gewinde, die zum Einschrauben einer entsprechenden Schraube geeignet sind, und bei den elektrischen Verbindern 132A um Steckkontakte, die mit korrespondierenden Buchsen verbindbar sind.

Das Elektronikmodul 110 weist zu den lösbaren mechanischen 130A und elektrischen 132A Verbindern des Zellenmoduls 120 korrespondierende Verbinder 130B, 132B auf. In diesem Beispiel sind dies beispielsweise Schrauben 130B und Buchsen 132B.

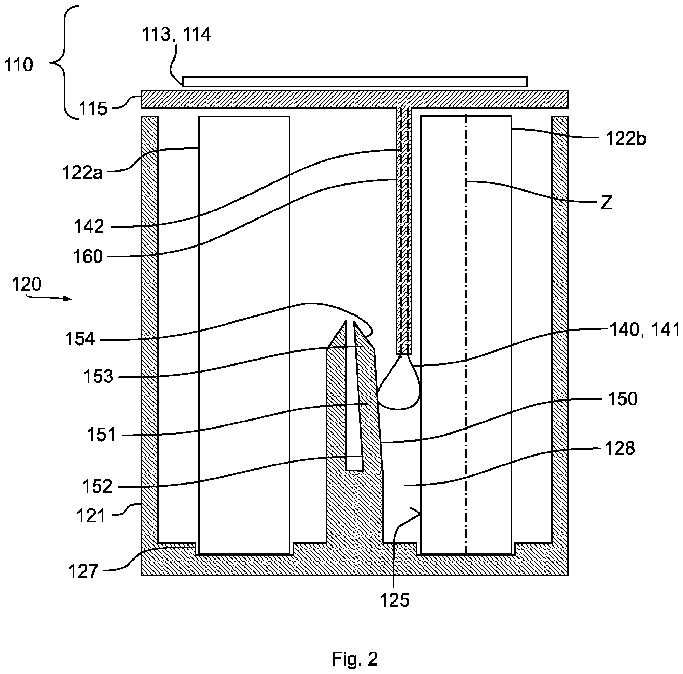

Das Elektronikmodul 110 weist beispielsweise eine Elektronikeinheit 113 (Fig. 2) mit einer Platine 114 mit einer gedruckten Schaltung (nicht gezeigt) zum Überwachen der Temperatur des Zellenmoduls 120 auf. Außerdem weist das Elektronikmodul 110 ein Gehäuse, einen Träger oder dergleichen auf, welches/welcher in Fig. 2 mit dem Bezugszeichen 115 versehen ist. Die mechanischen Verbinder 130B sind insbesondere an dem Gehäuse/Träger 115 angebracht.

Das Elektronikmodul 110 umfasst in diesem Beispiel weiterhin zwei elektrische Kontakte 111, 112 zum Kontaktieren von korrespondierenden elektrischen Kontakten (nicht gezeigt) der Handwerkzeugmaschine 1 (Fig. 10). An den Kontakten 111, 112 wird insbesondere die Ausgangsspannung des Zellenmoduls 120 bereitgestellt. Ein Strom zum Antreiben eines Elektromotors 2 (siehe Fig. 10) der Handwerkzeugmaschine 1 fließt in diesem Beispiel von den elektrischen Verbindern 132A über die elektrischen Verbinder 132B und die Kontakte 111, 112 zu dem Elektromotor 2.

Mittels der lösbaren mechanischen 130A, 130B und elektrischen 132A, 132B Verbinder können das Elektronikmodul 110 und das Zellenmodul 120 voneinander getrennt und wieder verbunden werden, ohne dass eines davon beschädigt wird. Mit anderen Worten kann die Akkueinheit 100 auseinandergebaut und wieder zusammengebaut werden.

Die Akkueinheit 100 ist nicht auf nur ein Zellenmodul 120 beschränkt, sondern kann auch mehrere mit dem Elektronikmodul 110 verbundene Zellenmodule ähnlich dem Zellenmodul 120 aufweisen.

Das Elektronikmodul 110 ist zum Überwachen einer Temperatur des Zellenmoduls 120 in Abhängigkeit wenigstens eines Temperaturwertes eingerichtet. Hierzu umfasst die Akkueinheit 100 insbesondere mindestens einen mit dem Elektronikmodul 110 elektrisch verbundenen Temperatursensor 140 zum Erfassen einer Temperatur des Zellenmoduls 120. Der Temperatursensor 140 wird im zusammengebauten Zustand des Elektronikmoduls 110 mit dem Zellenmodul 120 von einem an dem Halterahmen 121 angeordneten elastischen Element 150 an eine der Einzelzellen 122 angedrückt.

Fig. 2 zeigt eine Querschnittsansicht entlang Linie A-A der Akkueinheit 100 von Fig. 1 im zusammengebauten Zustand des Elektronikmoduls 110 mit dem Zellenmodul 120.

In Fig. 2 ist der Halterahmen 121 und zwei Einzelzellen 122a und 122b der Einzelzellen 122 des Zellenmoduls 120 zu sehen. Jede der Einzelzellen 122 weist eine kreiszylindrische Form 124 (Fig. 1) mit einer Mantelfläche 125 und einer kreisförmigen Grundfläche 126 auf. Der Halterahmen 121 weist in diesem Beispiel Einfassungen 127 (Fig. 2) zum Halten der Einzelzellen 122 auf.

Der Temperatursensor 140 (Fig. 2) dient dazu, einen Temperaturwert der Einzelzelle 122b zu messen. Der Temperatursensor 140 weist insbesondere einen Fühler 141 und eine mit dem Elektronikmodul 110 verbundene elektrische Leitung 142 auf.

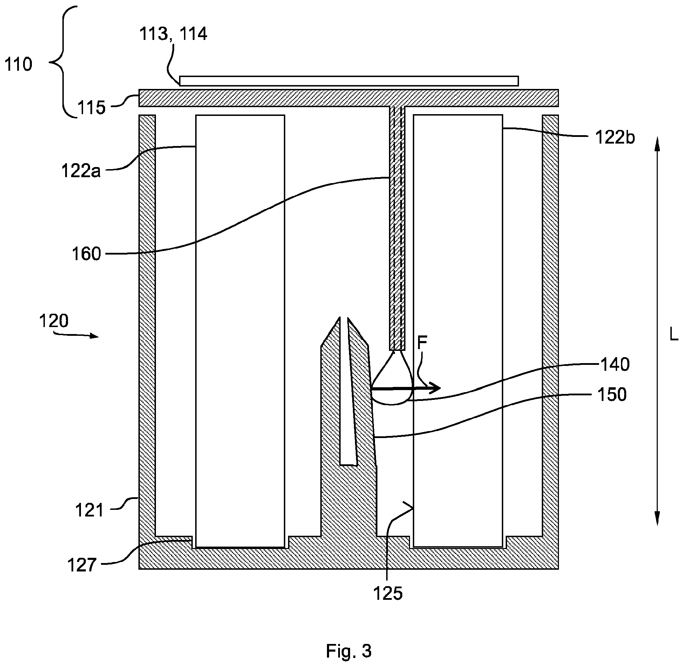

Fig. 2 zeigt außerdem das elastische Element 150, welches in diesem Beispiel integral mit dem Halterahmen 121 ausgebildet ist. Beispielsweise sind das elastische Element 150 und der Halterahmen 121 aus Kunststoff gefertigt. Das elastische Element 150 übt eine elastische Kraft F (Fig. 3) senkrecht zu seiner Längsachse L auf den Temperatursensor 140 aus und drückt damit den Temperatursensor 140 gegen die Einzelzelle 122b. Insbesondere drückt das elastische Element 150 den Fühler 141 des Temperatursensors 140 gegen die Mantelfläche 125 der Einzelzelle 122b. Dadurch wird der Temperatursensor 140 (insbesondere der Fühler 141 des Temperatursensors 140) in einen mechanischen und thermischen Kontakt mit der Mantelfläche 125 der Einzelzelle 122b gebracht. Folglich kann mittels des Temperatursensors 140 die Temperatur der Einzelzelle 122b erfasst werden.

Das elastische Element 150 weist eine einseitig eingespannte Blattfeder 151 (Fig. 2) auf, welche an ihrem eingespannten Ende 152 fest mit dem Halterahmen 121 verbunden ist. Außerdem weist in dem gezeigten Beispiel die Blattfeder 151 an ihrem freien Ende 153 einen abgeschrägten Abschnitt 154 (vorliegend auch "schräge Ebene") auf, welcher als Einführhilfe für den Temperatursensor 140 in einen Zwischenraum 128 zwischen der Blattfeder 151 und der Einzelzelle 122b dient. Mit anderen Worten verjüngt sich das elastische Element 150 zu seinem freien Ende 153 hin.

Der Temperatursensor 140 ist elektrisch (elektrische Leitung 142) mit der Elektronikeinheit 113 des Elektronikmoduls 110 verbunden. Die Elektronikeinheit 113 weist beispielsweise die Platine 114 mit einer gedruckten Schaltung (nicht gezeigt) zum Überwachen der Temperatur des Zellenmoduls 120 mittels des von dem Temperatursensor 140 erfassten Temperaturwertes auf.

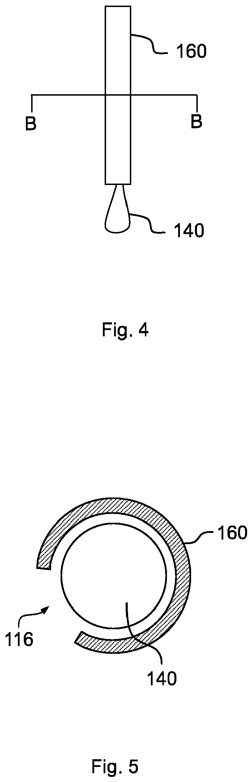

Die Akkueinheit 100 weist außerdem eine hülsenförmige Halterung 160 (Fig. 2) für den Temperatursensor 140 auf, welche an dem Elektronikmodul 110 befestigt ist. Die Halterung 160 ist beispielsweise an dem Gehäuse/Träger 115 (Fig. 2) des Elektronikmoduls 110 befestigt. Die Halterung 160 kann beispielsweise auch integral mit dem Gehäuse/Träger 115 ausgebildet sein. Das Gehäuse/der Träger 115 und die hülsenförmige Halterung 160 sind beispielsweise aus Kunststoffmaterial gefertigt. Fig. 4 zeigt den Temperatursensor 140 mit der hülsenförmigen Halterung, und Fig. 5 zeigt einen Querschnitt entlang Linie B-B in Fig. 4. Die Halterung 160 weist beispielsweise einen längsseitigen Einschnitt 116 auf, wie in Fig. 5 zu erkennen ist. Die Halterung 160 dient zum Halten und Versteifen des Temperatursensors 140, so dass der Temperatursensors 140 bei der Montage besser und einfacher in den Zwischenraum 128 (Fig. 2) zwischen dem elastischen Element 150 und der Einzelzelle 122b eingebracht werden kann.

In den Figuren ist der Temperatursensor 140 zwischen den Einzelzellen 122a und 122b angeordnet. Dies ist jedoch nur eine beispielhafte Anordnung. Der Temperatursensor 140 kann auch zwischen zwei anderen der Einzelzellen 122 a - f (Fig. 1) angeordnet sein. Noch vorteilhafter für die Temperaturüberwachung ist beispielsweise, wenn der Temperatursensor 140 zwischen den Einzelzellen 122c und 122d (Fig. 1) angeordnet wird, da in diesem Fall die Temperaturmessung noch weiter im Innern des Zellenmoduls 120 erfolgen kann. Der Temperatursensor 140 kann in anderen Beispielen auch zwischen drei oder mehr der Einzelzellen 122 a - f angeordnet sein.

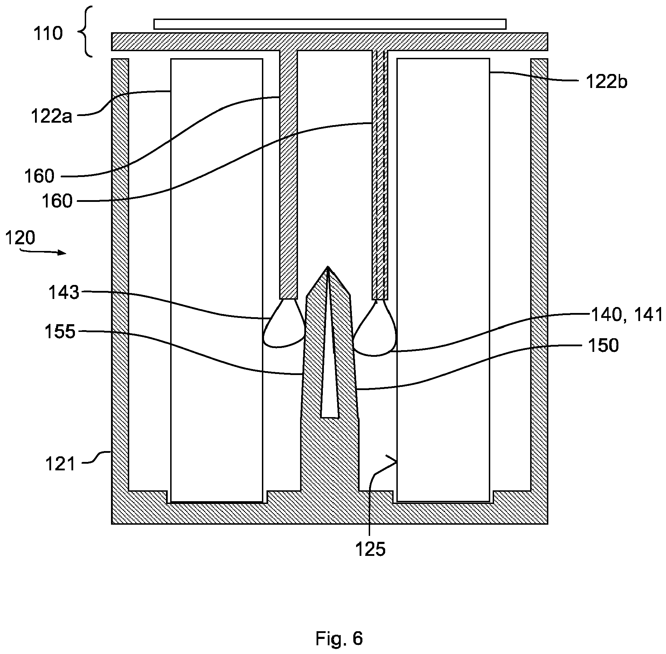

In den Figuren 1 bis 3 ist lediglich ein Temperatursensor 140 gezeigt. Jedoch können, wie in Fig. 6 gezeigt, auch mehrere Temperatursensoren 140, 143 in dem Zellenmodul 120 angeordnet werden und von einem jeweiligen elastischen Element 150, 155 an eine jeweilige Einzelzelle 122 (in dem Beispiel von Fig. 6 die Einzelzellen 122a, 122b) angedrückt werden.

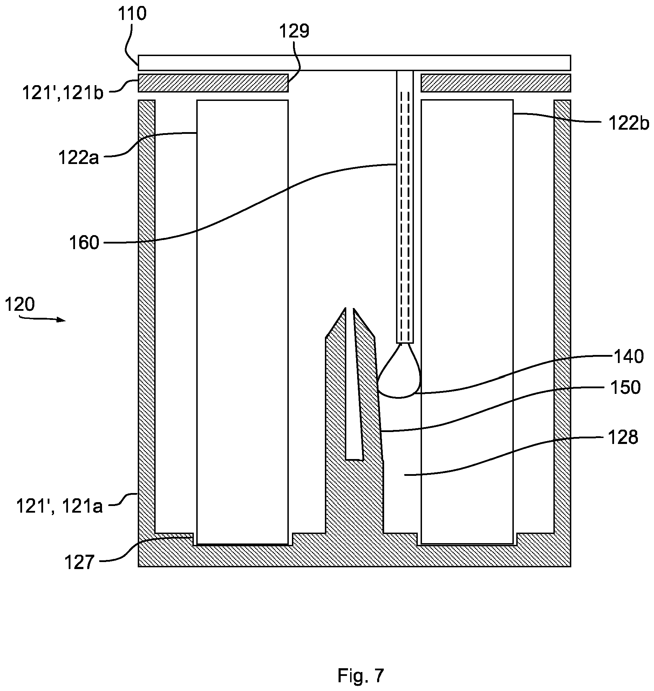

Fig. 7 zeigt eine Ausführungsform, bei welcher ein Halterahmen 121' einen Bodenabschnitt 121a und einen Deckelabschnitt 121b aufweist. Der Deckelabschnitt 121b weist eine Öffnung 129 im Bereich des Temperatursensors 140 auf, so dass der Temperatursensor 140 durch die Öffnung 129 hindurch in den Innenraum des Zellenmoduls 120 und in den Zwischenraum 128 zwischen dem elastischen Element 150 und dem Temperatursensor 140 eingeführt werden kann.

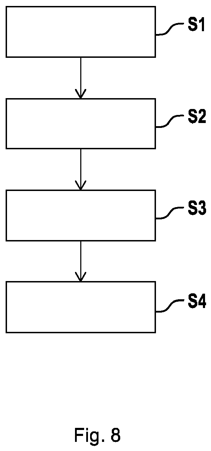

Fig. 8 zeigt ein Flussablaufdiagramm eines Herstellungsverfahrens für eine Akkueinheit 100, wie beispielsweise der in der Fig. 1 gezeigten Akkueinheit 100, gemäß einer ersten Ausführungsform.

In einem ersten Schritt S1 des Verfahrens wird ein Halterahmen 121 (Figuren 1 und 2) mit einem elastischen Element 150 bereitgestellt.

In einem zweiten Schritt S2 des Verfahrens werden Einzelzellen 122 in dem Halterahmen 121 stehend angeordnet.

In einem dritten Schritt S3 des Verfahrens wird ein Elektronikmodul 110 mit einem von einer Halterung 160 gehaltenen Temperatursensor 140 bereitgestellt.

In einem vierten Schritt S4 des Verfahrens wird das Elektronikmodul auf dem Halterahmen 121 angeordnet. Dabei wird der Temperatursensor 140 in einen Zwischenraum 128 zwischen dem elastischen Element 150 und einer (122b) der Einzelzellen 122 eingebracht, so dass der Temperatursensor 140 von dem elastischen Element 150 an die Einzelzelle 122b angedrückt wird.

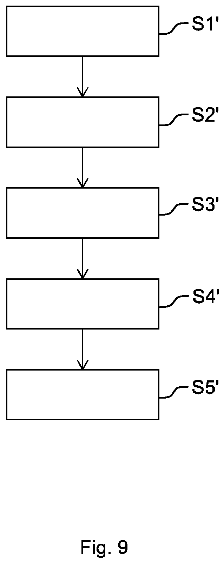

Fig. 9 zeigt ein Flussablaufdiagramm eines Herstellungsverfahrens für eine Akkueinheit 100 gemäß einer zweiten Ausführungsform.

In einem ersten Schritt S1' des Verfahrens wird ein Bodenabschnitt 121a eines Halterahmens 121' (Fig. 7) mit einem elastischen Element 150 bereitgestellt.

In einem zweiten Schritt S2' des Verfahrens werden Einzelzellen 122 in dem Bodenabschnitt 121a des Halterahmens 121 stehend angeordnet.

In einem dritten Schritt S3' des Verfahrens wird ein Deckelabschnitt 121b des Halterahmens 121' auf dem Bodenabschnitt 121a angeordnet.

In einem vierten Schritt S4' des Verfahrens wird ein Elektronikmodul 110 mit einem von einer Halterung 160 gehaltenen Temperatursensor 140 bereitgestellt.

In einem fünften Schritt S5' des Verfahrens wird das Elektronikmodul 110 auf dem Deckelabschnitt 121b des Halterahmen 121' angeordnet. Dabei wird der Temperatursensor 140 in einen Zwischenraum 128 zwischen dem elastischen Element 150 und einer (122b) der Einzelzellen 122 eingebracht, so dass der Temperatursensor 140 von dem elastischen Element 150 an die Einzelzelle 122b angedrückt wird.

Fig. 10 zeigt eine schematische Ansicht einer akkubetriebenen Handwerkzeugmaschine 1. Es handelt sich beispielsweise um einen Bohrhammer. Der Bohrhammer 1 weist einen Elektromotor 2 auf, der von einer Akkueinheit 100 (beispielsweise der anhand der Figuren 1 bis 7 erläuterten Akkueinheit 100) mit Strom versorgt wird. Ein Hauptschalter 3 kontrolliert dabei beispielsweise die Leistung, die der Akkueinheit 100 entnommen wird. Wenn das Elektronikmodul 110 (Fig.1) feststellt, dass eine erfasste Temperatur des Zellenmoduls 120 einen zulässigen Höchstwert überschreitet, dann kann sie eine Mitteilung an eine Abschaltautomatik (nicht gezeigt) der Handwerkzeugmaschine 1 schicken, die Handwerkzeugmaschine 1 abzuschalten.

### BEZUGSZEICHENLISTE

- 1: Handwerkzeugmaschine
- 2: Elektromotor
- 3: Schalter
- 100: Akkueinheit
- 110: Elektronikmodul
- 111: elektrischer Kontakt
- 112: elektrischer Kontakt
- 113: Elektronikeinheit
- 114: Platine
- 115: Gehäuse/Träger
- 116: Einschnitt
- 120: Zellenmodul
- 121: Halterahmen
- 121': Halterahmen
- 122: Einzelzelle
- 122a-f: Einzelzelle
- 123: elektrische Verbindung
- 124: zylindrische Form
- 125: Mantelfläche
- 126: Grundfläche
- 127: Einfassung
- 128: Zwischenraum
- 129: Öffnung
- 130A: lösbare mechanische Verbindung
- 130B: lösbare mechanische Verbindung
- 132A: lösbare elektrische Verbindung
- 132B: lösbare elektrische Verbindung
- 140: Temperatursensor
- 141: Fühler
- 142: elektrische Leitung
- 143: Temperatursensor
- 150: elastisches Element
- 151: Blattfeder
- 152: Ende
- 153: Ende
- 154: abgeschrägter Abschnitt
- 155: elastisches Element
- 160: Halterung

- F: Kraft
- L: Längsachse
- S1 - S4: Verfahrensschritte
- S1' - S5': Verfahrensschritte
- Z: Zylinderachse

## Patentansprüche

1. Akkueinheit (100) für eine Handwerkzeugmaschine (1), aufweisend:
ein Zellenmodul (120) mit einem Halterahmen (121, 121') und mehreren von dem Halterahmen (121, 121') gehaltenen Einzelzellen (122), wobei die Einzelzellen (122) zum Bereitstellen einer vorgegebenen Ausgangsspannung elektrisch miteinander verbunden (123) sind,
einen Temperatursensor (140, 143) zum Erfassen mindestens eines Temperaturwertes des Zellenmoduls (120), und
ein mit dem Temperatursensor (140, 143) verbundenes Elektronikmodul (110) zum Überwachen einer Temperatur des Zellenmoduls (120) in Abhängigkeit des erfassten mindestens einen Temperaturwertes,
wobei der Temperatursensor (140, 143) von einem elastischen Element (150, 155) in einem direkten Kontakt mit einer Einzelzelle (122) des Zellenmoduls (120) gehalten wird.

2. Akkueinheit nach Anspruch 1, **dadurch gekennzeichnet, dass** der Temperatursensor (140, 143) zwischen mindestens zwei Einzelzellen (122) des Zellenmoduls (120) angeordnet ist und von dem elastischen Element (150, 155) in direktem Kontakt mit mindestens einer der mindestens zwei Einzelzellen (122) gehalten wird.

3. Akkueinheit nach Anspruch 1 oder 2, **dadurch gekennzeichnet, dass** die Einzelzellen (122) des Zellenmoduls (120) jeweils eine zylindrische Form (124) mit einer Mantelfläche (125) aufweisen, der Temperatursensor (140, 143) zwischen den Mantelflächen (125) von mindestens zwei Einzelzellen (122) angeordnet ist und von dem elastischen Element (150, 155) in direktem Kontakt mit der Mantelfläche (125) von mindestens einer der mindestens zwei Einzelzellen (122) gehalten wird.

4. Akkueinheit nach einem der Ansprüche 1 - 3, **dadurch gekennzeichnet, dass** das elastische Element (150, 155) eine einseitig eingespannte Blattfeder (151) aufweist, die an ihrem eingespannten Ende (152) mit dem Halterahmen (121) verbunden ist und an ihrem freien Ende (153) eine senkrecht zu ihrer Längsachse (L) wirkende elastische Kraft (F) auf den Temperatursensor (140, 143) ausübt.

5. Akkueinheit nach Anspruch 4, **dadurch gekennzeichnet, dass** der Temperatursensor (140, 143) in einem Zwischenraum (128) zwischen dem elastischen Element (150, 155) und der mit dem Temperatursensor (140, 143) in direktem Kontakt stehenden Einzelzelle (122) angeordnet ist, und sich das elastische Element (150, 155) zu seinem freien Ende (153) hin und von der mit dem Temperatursensor (140, 143) in direktem Kontakt stehenden Einzelzelle (122) weggerichtet verjüngt (154).

6. Akkueinheit nach einem der Ansprüche 1 - 5, **dadurch gekennzeichnet, dass** das elastische Element (150, 155) integral mit dem Halterahmen (121, 121') ausgebildet ist.

7. Akkueinheit nach einem der Ansprüche 1 - 6, wobei sie eine Halterung (160), insbesondere eine hülsenförmige Halterung (160), für den Temperatursensor (140, 143) aufweist.

8. Akkueinheit nach einem der Ansprüche 1 - 7, **dadurch gekennzeichnet, dass** der Halterahmen (121') einen Bodenabschnitt (121a) und einen Deckelabschnitt (121b) aufweist, zwischen denen die Einzelzellen (122) stehend angeordnet sind, und einer von dem Bodenabschnitt (121a) und dem Deckelabschnitt (121b) mit dem elastischen Element (150, 155) verbunden ist und der andere von dem Bodenabschnitt (121a) und dem Deckelabschnitt (121b) den Temperatursensor (140, 143) aufweist.

9. Akkueinheit nach Anspruch 8, **dadurch gekennzeichnet, dass** das Elektronikmodul (110) an dem Deckelabschnitt (121b) angeordnet ist.

10. Akkueinheit nach Anspruch 8 oder 9, **dadurch gekennzeichnet, dass** das elastische Element (150, 155) integral mit dem Bodenabschnitt (121a) ausgebildet ist und/oder eine Halterung (160) für den Temperatursensor (140, 143) integral mit dem Deckelabschnitt (121b) oder mit einem an dem Deckelabschnitt (121b) angeordneten Gehäuse (115) des Elektronikmoduls (110) ausgebildet ist.

11. Akkueinheit nach einem der Ansprüche 1 - 10, **dadurch gekennzeichnet, dass** die Einzelzellen (122) jeweils eine zylindrische Form (124) mit einer Zylinderachse (Z) aufweisen und das Elektronikmodul (110) eine Platine (114) aufweist, deren Haupterstreckungsebene senkrecht zur Zylinderachse (Z) angeordnet ist.

12. Handwerkzeugmaschine (1) mit einer Akkueinheit (100) nach einem der Ansprüche 1 - 11.

13. Herstellungsverfahren für eine Akkueinheit (100) nach einem der Ansprüche 1 - 11, wobei ein Temperatursensor (140, 143) der Akkueinheit (100) in einen Zwischenraum (128) zwischen einem elastischen Element (150, 155) der Akkueinheit (100) und einer Einzelzelle (122) eines Zellenmoduls (120) der Akkueinheit (100) eingebracht wird (S4), und der Temperatursensor (140, 143) mittels des elastischen Elements (150, 155) an die Einzelzelle (122) angedrückt wird.

14. Herstellungsverfahren nach Anspruch 13, mit den Schritten:
stehendes Anordnen (S2) von Einzelzellen (122) des Zellenmoduls (120) der Akkueinheit (100) in einem Halterahmen (121) des Zellenmoduls (120), wobei der Halterahmen (121) das elastische Element (150, 155) aufweist,
Anordnen (S4) eines Elektronikmoduls (110) der Akkueinheit (100) auf dem Halterahmen (121), wobei das Elektronikmodul (110) den Temperatursensor (140, 143) aufweist und der Temperatursensor (140, 143) in den Zwischenraum (128) zwischen dem elastischen Element (150, 155) und der Einzelzelle (122) eingebracht wird, so dass der Temperatursensor (140, 143) von dem elastischen Element (150, 155) an die Einzelzelle (122) angedrückt wird.

15. Herstellungsverfahren nach Anspruch 13, mit den Schritten:
stehendes Anordnen (S2', S3') von Einzelzellen (122) des Zellenmoduls (120) der Akkueinheit (100) zwischen einem Bodenabschnitt (121a) und einem Deckelabschnitt (121b) eines Halterahmens (121') des Zellenmoduls (120), wobei der Bodenabschnitt (121a) das elastische Element (150, 155) aufweist,
Anordnen (S5') eines Elektronikmoduls (110) der Akkueinheit (100) auf dem Deckelabschnitt (121b), wobei das Elektronikmodul (110) den Temperatursensor (140, 143) aufweist und der Temperatursensor (140, 143) in den Zwischenraum (128) zwischen dem elastischen Element (150, 155) und der Einzelzelle (122) eingebracht wird, so dass der Temperatursensor (140, 143) von dem elastischen Element (150, 155) an die Einzelzelle (122) angedrückt wird.
